# EUROPEAN PATENT APPLICATION

(11) **EP 4 589 370 A1**
(43) Date of publication of application: **23.07.2025**
(21) Application number: 23865624.3
(22) Date of filing: 15.09.2023
(51) Int. Cl.: G02F 1/13, G02F 1/1334

(54) **LIGHT CONTROL SHEET**

(30) Priority: 16.09.2022 JP 2022148568; 27.10.2022 JP 2022172385
(71) Applicant: Toppan Holdings Inc., Tokyo 110-0016 (JP)
(72) Inventor: MATSUBARA, Yoshitaka, Tokyo 110-0016 (JP); KIZAKI, Takuya, Tokyo 110-0016 (JP)
(74) Representative: TBK
(86) International application number: PCT/JP2023/033793
(87) International publication number: WO 2024/058275

(57) **Abstract**

A light control sheet includes: a light control layer including a transparent polymer layer containing a plurality of domains and a liquid crystal composition filling the domains, the liquid crystal composition containing a liquid crystal compound and a dichroic dye; and a pair of transparent electrode layers sandwiching the light control layer. The light control sheet is configured to change alignment of the liquid crystal compound and the dichroic dye in response to a change in potential difference between the pair of transparent electrode layers, thereby switching from a colored opaque state to a transparent state. The domains have an average diameter of 0.7 µm or less.

## Description

### [Technical Field]

The present disclosure relates to light control sheets.

### [Background Art]

A light control sheet includes a light control layer in which a liquid crystal composition is dispersed in a polymer material, and a pair of transparent electrode layers sandwiching the light control layer, and a driving voltage is applied between the pair of transparent electrode layers. By changing the alignment state of the liquid crystal molecules in response to whether the driving voltage is applied, the light control sheet can switch between the transparent state in which light passes through the light control layer and the opaque state in which light is scattered in the light control layer.

In general, the light control sheet appears colorless and transparent in the transparent state and turbid in the opaque state. Meanwhile, from the viewpoint of design suitable for the environment of use, it may be desirable for the light control sheet in the opaque state to have a color other than white. Accordingly, it has been proposed to add a dichroic dye to the liquid crystal composition (see e.g., PTL 1). The dichroic dye has characteristics that the absorbance in the major axis direction of the molecule is greater than that in the minor axis direction, and is aligned according to the liquid crystal molecules. By adding a dichroic dye, the light control sheet in the opaque state exhibits a color derived from the dichroic dye.

### [Citation List]

### [Patent Literature]

PTL 1: JP 7024801 B

### [Summary of Invention]

### [Technical Problem]

In order to clearly distinguish the difference between the transparent state and the opaque state of a light control sheet containing a dichroic dye, it is desirable that the ratio of the total light transmittance in the transparent state to that in the opaque state is large. For example, in the light control sheet of PTL 1, a horizontal alignment layer is disposed between the transparent electrode layer and the light control layer, so the liquid crystal molecules and the dichroic dye molecules are aligned horizontally to the transparent electrode layer when no driving voltage is applied. That is, the major axis direction of many dichroic dye molecules is aligned substantially perpendicular to the light incident direction. This enhances the color exhibited by the dichroic dye in the opaque state, increasing the ratio of the total light transmittance in the transparent state to that in the opaque state.

On the other hand, in the light control sheet having no alignment layer such as a horizontal alignment layer, that is, in the light control sheet in which the liquid crystal molecules and the dichroic dye molecules are randomly oriented in the opaque state, there is still room for improvement in configuration for increasing the ratio of the total light transmittance in the transparent state to that in the opaque state.

### [Solution to Problem]

An aspect of a light control sheet includes: a light control layer including a transparent polymer layer containing a plurality of domains, and a liquid crystal composition filling the domains, the liquid crystal composition containing a liquid crystal compound and a dichroic dye; and a pair of transparent electrode layers sandwiching the light control layer, the light control sheet being configured to change alignment of the liquid crystal compound and the dichroic dye in response to a change in potential difference between the pair of transparent electrode layers, thereby switching from a colored opaque state to a transparent state. The domains have an average diameter of 0.7 µm or less.

### [Brief Description of Drawings]

Fig. 1 is a cross-sectional view illustrating a layered structure of a light control sheet according to a first embodiment.
Fig. 2 is a schematic diagram illustrating a configuration of a light control layer according to the first embodiment.

### [Description of Embodiments]

### (First Embodiment)

With reference to the drawings, a first embodiment of a light control sheet will be described.

### [Configuration of Light Control Sheet]

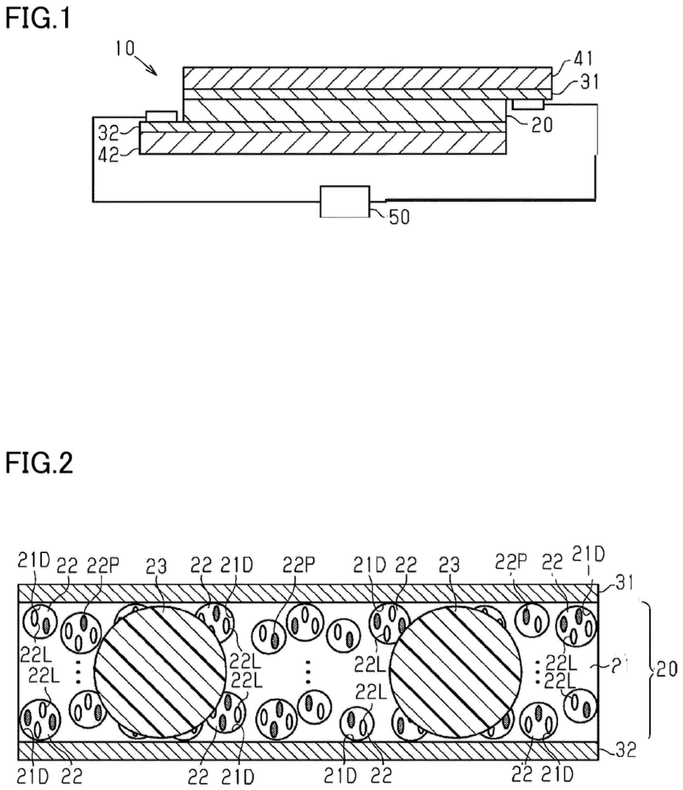

With reference to Fig. 1, an overall configuration of a light control sheet will be described.

As shown in Fig. 1, a light control sheet 10 includes a light control layer 20, a first transparent electrode layer 31, a second transparent electrode layer 32, a first transparent support layer 41 and a second transparent support layer 42. The light control layer 20 is sandwiched between the first transparent electrode layer 31 and the second transparent electrode layer 32, and is in contact with the transparent electrode layers 31 and 32. The first transparent support layer 41 supports the first transparent electrode layer 31 on a side of the first transparent electrode layer 31 opposite to that facing the light control layer 20, and the second transparent support layer 42 supports the second transparent electrode layer 32 on a side of the second transparent electrode layer 32 opposite to that facing the light control layer 20.

The light control layer 20 includes a transparent polymer layer having a plurality of voids, and a liquid crystal composition held in the voids. The light control layer 20 may have, for example, a polymer-dispersed liquid crystal (PDLC) or polymer-network liquid crystal (PNLC) structure.

Each of the first transparent electrode layer 31 and the second transparent electrode layer 32 is conductive and transparent to light in the visible region. The materials of the transparent electrode layers 31 and 32 may be, for example, indium tin oxide, fluorine-doped tin oxide, tin oxide, zinc oxide, carbon nanotubes, poly(3,4-ethylenedioxythiophene), silver or silver alloys.

Each of the first transparent support layer 41 and the second transparent support layer 42 is a substrate transparent to light in the visible region. The materials of the transparent support layers 41 and 42 may be, for example, synthetic resins or inorganic compounds. Examples of the synthetic resins include polyesters such as polyethylene terephthalate and polyethylene naphthalate, polyacrylates such as polymethyl methacrylate, polycarbonates, polyolefins, and the like. Examples of the inorganic compounds include silicon dioxide, silicon oxynitride, silicon nitride, and the like.

Each of the first transparent electrode layer 31 and the second transparent electrode layer 32 are connected to the control unit 50 via a wiring. The control unit 50 generates a voltage for driving the light control sheet 10 and applies the generated voltage to the transparent electrode layers 31 and 32 through the wiring. The control unit 50 controls the potential difference between the transparent electrode layers 31 and 32 through control of whether a voltage is applied and control of the magnitude of the applied voltage. The light control sheet 10 and the control unit 50 constitute the light control device.

The light control sheet 10 is attached to a transparent substrate, which is an object to be attached. The transparent substrate may be a glass substrate or a resin substrate. Examples of the transparent substrate include window glass mounted on mobile objects such as vehicles and aircraft, window glass installed in buildings, and partitions placed inside the car or indoors. The surface to which the light control sheet 10 is attached may be flat or curved. The light control sheet 10 may be sandwiched between two transparent substrates.

### [Configuration of Light Control Layer]

With reference to Fig. 2, a configuration of the light control layer 20 will be described in detail. Fig. 2 is a diagram schematically illustrating the laminated portion including the light control layer 20 and the transparent electrode layers 31 and 32 in the cross-sectional structure of the light control sheet 10, with emphasis on the configuration of the light control layer 20.

The light control layer 20 contains a transparent polymer layer 21, a liquid crystal composition 22 and spacers 23. The transparent polymer layer 21 is a cured photopolymerizable compound. The transparent polymer layer 21 defines a plurality of domains 21D dispersed therein. In other words, the domains 21D are voids. The shape of the domains 21D may be, for example, substantially spherical, ellipsoidal or irregular. The space in the domains 21D is filled with the liquid crystal composition 22.

The domain diameter, which is an index of the size of the domain 21D, is 0.3 µm or greater and 0.7 µm or less. The domain diameter is the average diameter of the domains 21D contained in the light control layer 20, and is identified for the domains 21D contained in the cross-section in the thickness direction of the light control layer 20, in other words, in the cross-section perpendicular to the plane in which the light control layer 20 extends. That is, for each domain 21D contained in the cross-section described above, the diameter of a circle having the same area as that of the domain 21D is defined as the domain diameter of the domain 21D, and the average of the domain diameters of the domains 21D contained in the cross-section is defined as the domain diameter of the light control layer 20.

The ratio of the transparent polymer layer 21 to the transparent polymer layer 21 and the liquid crystal composition 22 is preferably 20 mass% or greater and 80 mass% or less, and more preferably 30 mass% or greater and 60 mass% or less. The ratio of the transparent polymer layer 21 within the above range ensures the domains 21D to an appropriate extent. Within the above range, the greater the ratio of the transparent polymer layer 21, the higher the mechanical strength of the transparent polymer layer 21 can be, and the smaller the ratio of the transparent polymer layer 21, the lower the driving voltage of the light control sheet 10 can be.

The photopolymerizable compound as the material of the transparent polymer layer 21 may be a UV-curable compound or an electron beam-curable compound. The photopolymerizable compound is miscible with the liquid crystal composition 22. When the photopolymerizable compound is a UV-curable compound, the controllability of the dimensions of the domain 21D is increased. The photopolymerizable compound may be a single polymerizable compound or a combination of two or more polymerizable compounds.

An example of the UV-curable compound contains polymerizable unsaturated bonds at the ends of the molecular structure. Other examples of the UV-curable compound contain polymerizable unsaturated bonds at sites other than the ends of the molecular structure. The UV-curable compound may be, for example, acrylate compounds, methacrylate compounds, thiol compounds, styrene compounds, and oligomers of these compounds. The acrylate compounds include diacrylate compounds, triacrylate compounds and tetraacrylate compounds. Examples of the acrylate compounds include butyl ethyl acrylate, ethyl hexyl acrylate and cyclohexyl acrylate. Examples of the methacrylate compounds include dimethacrylate compounds, trimethacrylate compounds and tetramethacrylate compounds. Examples of the methacrylate compounds include N,N-dimethylaminoethyl methacrylate, phenoxyethyl methacrylate, methoxyethyl methacrylate and tetrahydrofurfuryl methacrylate. Examples of the thiol compounds include 1,3-propanedithiol and 1,6-hexanedithiol. Examples of the styrene compounds include styrene and methyl styrene.

The transparent polymer layer 21 is formed by promoting polymerization of a photopolymerizable compound using a photopolymerization initiator. In order to form the domain diameter of 0.7 µm or less, the photopolymerization initiator used is preferably at least one selected from the group consisting of oxime ester compounds, alkylphenone compounds and acylphosphine oxide compounds. In particular, it is preferred that the photopolymerization initiator contains an oxime ester compound, or contains an alkylphenone compound and an acylphosphine oxide compound.

The photopolymerization initiator is excited by absorption of light in the ultraviolet region to cause a cleavage reaction, and radicals generated in this process react with the photopolymerizable compound to initiate polymerization. Therefore, when the photopolymerization initiator contains an oxime ester compound, the polymer compound constituting the transparent polymer layer 21 contains a polymer compound containing an intramolecular dissociative group of the oxime ester compound at the end of the molecular structure. For example, when the photopolymerizable compound is a (meth)acrylate compound, the transparent polymer layer 21 contains a polymer compound having a skeleton derived from a (meth)acrylate and having an intramolecular dissociative group of an oxime ester compound at the end of the molecular structure. The term "(meth)acrylate" includes acrylate and methacrylate. The transparent polymer layer 21 may contain a polymer compound having an intramolecular dissociative group of an oxime ester compound at a site other than the end of the molecular structure.

Similarly, when the photopolymerization initiator contains an alkylphenone compound, the polymer compound constituting the transparent polymer layer 21 contains a polymer compound containing an intramolecular dissociative group of the alkylphenone compound at the end of the molecular structure. The transparent polymer layer 21 may contain a polymer compound having an intramolecular dissociative group of the alkylphenone compound at a site other than the end of the molecular structure.

Further, when the photopolymerization initiator contains an acylphosphine oxide compound, the polymer compound constituting the transparent polymer layer 21 contains a polymer compound containing an intramolecular dissociative group of the acylphosphine oxide compound at the end of the molecular structure. The transparent polymer layer 21 may contain a polymer compound having an intramolecular dissociative group of the acylphosphine oxide compound at a site other than the end of the molecular structure.

The oxime ester compounds may have, for example, any of a carbazole skeleton, diphenyl sulfide skeleton and fluorene skeleton. Specific examples of the oxime ester compounds include 1,2-octanedione, 1-[4-(phenylthio)phenyl]-, 2-(O-benzoyloxime), ethanone, 1-[9-ethyl-6-(2-methylbenzoyl)-9H-carbazol-3-yl]-, 1-(O-acetyloxime), methanone, [8-[[(acetyloxy)imino][2-(2,2,3,3-tetrafluoropropoxy)phenyl]methyl]-11-(2-ethylhexyl)-11H-benzo[a]carbazole-5-yl]-, (2,4,6-trimethylphenyl), ethanone, 1-[9-ethyl-6-(1,3-dioxolane, 4-(2-methoxyphenoxy)-9H-carbazole-3-yl]-, 1-(o-acetyloxime), methanone, (9-ethyl-6-nitro-9H-carbazole-3-yl)[4-(2-methoxy-1-methylethoxy-2-methylphenyl]-, o-acetyloxime, and the like.

Examples of commercially available oxime ester compounds that can be used include Irgacure OXE01 (manufactured by BASF Japan Ltd.), Irgacure OXE02 (manufactured by BASF Japan Ltd.), Irgacure OXE03 (manufactured by BASF Japan Ltd.), Irgacure OXE04 (manufactured by BASF Japan Ltd.), ADEKA ARKLS N-1919T (manufactured by ADEKA Corporation), ADEKAARKLS NCI-831E (manufactured by ADEKA Corporation), ADEKAARKLS NCI-930 (manufactured by ADEKA Corporation), ADEKA ARKLS NCI-730 (manufactured by ADEKA Corporation), and the like.

Examples of the alkylphenone compounds include α-aminoalkylphenone compounds, α-hydroxyalkylphenone compounds, α-hydroxyacetophenone compounds, benzyl ketal compounds, and the like. In particular, α-aminoalkylphenone compounds are preferably used. Specific examples of the alkylphenone compounds include 2-methyl-1-[4-(methylthio)phenyl]-2-morpholinopropan-1-one, 1-hydroxycyclohexyl phenyl ketone, 2-hydroxy-2-methylpropiophenone, 2,2-dimethoxy-2-phenylacetophenone, and the like.

Examples of commercially available alkylphenone compounds that can be used include Irgacure 907 (manufactured by BASF Japan Ltd.), Irgacure 184 (manufactured by BASF Japan Ltd.), Irgacure 1173 (manufactured by BASF Japan Ltd.), Irgacure 651 (manufactured by BASF Japan Ltd.), and the like.

Examples of the acylphosphine oxide compounds include monoacylphosphine oxides and bisacylphosphine oxides. Specific examples of the acylphosphine oxide compounds include diphenyl (2,4,6-trimethylbenzoyl)phosphine oxide.

Examples of commercially available acylphosphine oxide compounds that can be used include Irgacure TPO (manufactured by BASF Japan Ltd.).

The liquid crystal composition 22 contains a liquid crystal compound 22L and a dichroic dye 22P. The liquid crystal composition 22 may further contain a viscosity reducing agent, a defoamer, an antioxidant, a weathering agent, and the like. Examples of the weathering agent include UV absorbers and light stabilizers.

The liquid crystal compound 22L is a non-polymerizable compound. The dielectric constant of the liquid crystal compound 22L in the major axis direction is higher than the dielectric constant of the liquid crystal compound 22L in the minor axis direction. That is, the liquid crystal compound 22L has a positive dielectric anisotropy.

The liquid crystal compound 22L may be, for example, Schiff base-based, azo-based, azoxy-based, biphenyl-based, terphenyl-based, benzoate-based, tolan-based, pyrimidine-based, pyridazine-based, cyclohexanecarboxylate-based, phenylcyclohexane-based, biphenylcyclohexane-based, dicyanobenzene-based, naphthalene-based or dioxane-based compound. The liquid crystal compound 22L may be a single liquid crystal compound or a combination of two or more liquid crystal compounds.

An example of the liquid crystal compound 22L is a compound represented by the following general formula (1).

R¹¹-A¹¹-Z¹¹-A¹²-Z¹²-A¹³-Z¹³-A¹⁴-R¹² ... (1)

In the above general formula (1), R ¹¹ is a hydrogen atom or an alkyl group having 1 or more and 20 or fewer carbon atoms. One methylene bond or two or more non-adjacent methylene bonds contained in the alkyl group R¹¹ can be substituted with any one selected from the group consisting of oxygen atoms, ethylene bonds, ester bonds and diether bonds. R¹² is one selected from the group consisting of a hydrogen atom, a fluorine atom, a chlorine atom, a nitrile group, a trifluoromethyl group, a trifluoromethoxy group, a difluoromethoxy group and an alkyl group having 1 or more and 15 or fewer carbon atoms. One methylene bond or two or more non-adjacent methylene bonds contained in the alkyl group R¹² can be substituted with any one selected from the group consisting of oxygen atoms, ethylene bonds, ester bonds and diether bonds.

A¹¹, A¹², A¹³ and A¹⁴ each independently represent a 1,4-phenylene group or a 2,6-naphthylene group. One or more hydrogen atoms in the 1,4-phenylene group and 2,6-naphthylene group can be substituted with any one selected from the group consisting of a fluorine atom, a chlorine atom, a trifluoromethyl group and a trifluoromethoxy group. Alternatively, A¹¹, A¹², A¹³ and A¹⁴ may each independently be any one selected from the group consisting of a 1,4-cyclohexylene group, a 3,6-cyclohexenylene group, a 1,3-dioxane-2,5-diyl group and a pyridine-2,5-diyl group. A¹³ and A¹⁴ may each independently be a single bond.

Z¹¹, Z¹² and Z¹³ each independently represent one selected from the group consisting of single bonds, ester bonds, diether bonds, ethylene bonds, fluoroethylene bonds and carbonyl bonds.

The dichroic dye 22P has an elongated molecular shape, and the visible light absorbance in the major axis direction of the molecule is greater than the absorbance in the minor axis direction. The dichroic dye 22P exhibits a predetermined color when the major axis direction is substantially perpendicular to the light incident direction. The color exhibited by the dichroic dye 22P may be, for example, black or a color close to black. The dichroic dye 22P is driven as a guest-host type with the liquid crystal compound 22L as a host to exhibit color.

The dichroic dye 22P may be, for example, polyiodine, an azo compound, an anthraquinone compound, a naphthoquinone compound, an azomethine compound, a tetrazine compound, a quinophthalone compound, a merocyanine compound, a perylene compound or a dioxazine compound. The dichroic dye 22P may be a single dye or a combination of two or more dyes. From the viewpoint of improving the light resistance and dichroic ratio, the dichroic dye 22P is preferably at least one selected from the group consisting of azo compounds and anthraquinone compounds, and more preferably azo compounds.

The ratio of the dichroic dye 22P to the transparent polymer layer 21 and the liquid crystal composition 22 is preferably 0.5 mass% or greater and 10 mass% or less, and more preferably 1 mass% or greater and 5 mass% or less. The ratio of the dichroic dye 22P of 0.5 mass% or greater can make it easier to clearly recognize the difference in color between the transparent and opaque states of the light control sheet 10. The ratio of the dichroic dye 22P of 10 mass% or less can inhibit precipitation of particles of aggregated dichroic dye 22P.

The spacers 23 are dispersed throughout the entire transparent polymer layer 21. The spacers 23 determine the thickness of the light control layer 20 around the spacers 23 and uniform the thickness of the light control layer 20. The spacers 23 may be bead spacers or photo-spacers formed by exposure and development of photoresist. When the spacers 23 are transparent, the spacers 23 may be colorless and transparent or colored and transparent. The color developed by the colored and transparent spacers 23 is preferably the same as the color developed by the dichroic dye 22P.

Since the thickness of the light control layer 20 is substantially the same as that of the spacers 23, the thickness of the light control layer 20 can be controlled by changing the average particle size of the spacers 23. The average particle size of the spacers 23 may be, for example, 10 µm or greater and 30 µm or less in median diameter D50. In this case, the thickness of the light control layer 20 is 10 µm or greater and 30 µm or less.

### [Operation of Light Control Sheet]

A driving voltage is applied between the first transparent electrode layer 31 and the second transparent electrode layer 32 under the control of the control unit 50 as a voltage to change the alignment state of the liquid crystal compound 22L and the dichroic dye 22P. According to the change in the alignment state of the liquid crystal composition 22, the light control sheet 10 switches from one of the transparent state and the opaque state to the other. The light control sheet 10 in the opaque state has a lower total light transmittance than that in the transparent state, and has a higher haze than that in the transparent state.

When no driving voltage is applied, the major axis directions of the liquid crystal compound 22L and the dichroic dye 22P are randomly oriented. Therefore, light incident on the light control sheet 10 is scattered in various directions in the light control layer 20 due to the difference in refractive index between the liquid crystal compound 22L and the transparent polymer layer 21 caused by birefringence of the liquid crystal compound 22L. Further, since the major axis direction of the dichroic dye 22P is randomly oriented, at least part of the dichroic dye 22P exhibits color. Therefore, when no driving voltage is applied, the light control sheet 10 is in an opaque state and appears colored.

When a driving voltage is applied, the major axis directions of the liquid crystal compound 22L and the dichroic dye 22P are aligned in the electric field direction. That is, the orientations of the liquid crystal compound 22L and the dichroic dye 22P change so that the major axis directions are aligned in the thickness direction of the light control layer 20. This suppresses light scattering and color development of the dichroic dye 22P in the light control layer 20, and light is easily transmitted through the light control sheet 10. Therefore, when a driving voltage is applied, the light control sheet 10 is in a transparent state.

As described above, the opaque state and the transparent state of the light control sheet 10 are switched by switching application and release of the driving voltage.

In this embodiment, the domains 21D included in the light control layer 20 has a size smaller than a conventional size. Therefore, in the opaque state, light scattering is increased at the interface between the transparent polymer layer 21 and the liquid crystal composition 22, that is, at the boundary between the domains 21D and the liquid crystal composition 22. This increases the amount of scattered light in the light control layer 20 and increases light absorption by the dichroic dye 22P, thus enhancing color development of the dichroic dye 22P, resulting in a decrease in the total light transmittance of the light control sheet 10 in the opaque state. Therefore, the difference in total light transmittance between the transparent state and the opaque state can be increased without using an alignment layer. Specifically, the domain diameter of 0.7 µm or less ensures a sufficiently high ratio of the total light transmittance between the transparent state and the opaque state. On the other hand, the domain diameter of 0.3 µm or greater prevents the domains 21D from becoming excessively small, preventing a decrease in the degree of freedom of movement of the liquid crystal compound 22L.

The ratio (TTa/TTb) of a total light transmittance TTa in the transparent state to a total light transmittance TTb in the opaque state is preferably 8.0 or greater. The ratio of 8.0 or greater makes it possible to easily and clearly recognize the difference in transmittance between the opaque state and the transparent state by visual inspection. The total light transmittance is measured in accordance with JIS K 7361-1:1997 (ISO 1468-1).

The domain diameter in the light control layer 20 can be controlled by the sensitivity of the photopolymerization initiator to light, the intensity and irradiation time of light irradiated to the photopolymerizable compound, the processing temperature during polymerization of the photopolymerizable compound, and the like. In particular, the use of an oxime ester compound or an acylphosphine oxide compound as the photopolymerization initiator proceeds the polymerization reaction with high sensitivity to light, thereby reducing the domain diameter.

Further, the use of an oxime ester compound as the photopolymerization initiator can prevent the light control sheet 10 from having a yellowish tone, compared to the case of using an acylphosphine oxide compound.

On the other hand, the use of an acylphosphine oxide compound causes the light control sheet 10 to have a yellowish tone due to the tone of the compound, but using a mixture of an acylphosphine oxide compound and an alkylphenone compound can prevent the light control sheet 10 from having a yellowish tone while achieving good sensitivity to light. For example, the photopolymerization initiator may contain equal amounts of an acylphosphine oxide compound and an alkylphenone compound.

In production of the light control layer 20, the tone of the photopolymerization initiator usually disappears due to a photobleaching reaction. However, when the liquid crystal composition 22 contains the dichroic dye 22P, a part of the light energy is absorbed by the dichroic dye 22P, and unreacted photopolymerization initiator is likely to remain in the light control layer 20. In addition, when the photopolymerization initiator is mixed with the phase-separated liquid crystal composition 22, the photopolymerization initiator is less likely to react. As a result, it seems that the tone of the photopolymerization initiator is likely to remain on the light control sheet 10.

In the present embodiment, in which the light control sheet 10 contains the dichroic dye 22P, even when the light control sheet 10 has a yellowish tone, such tone is less likely to be recognizable in the opaque state in which the dichroic dye 22P exhibits color. This effect is particularly noticeable when the dichroic dye 22P exhibits black or a color close to black. However, a light control sheet 10 which appears colored in the transparent state is problematic from the viewpoint of improving the appearance quality of the light control sheet 10.

The use of an oxime ester compound or a mixture of an acylphosphine oxide compound and an alkylphenone compound as the photopolymerization initiator can suppress a yellowish tone of the light control sheet 10 to the extent that the light control sheet 10 in the transparent state can be said to be achromatic.

When the color of the light control sheet 10 is expressed using the CIE1976 (L*a*b*) color system in accordance with JIS Z 8781-4, the chromaticity a* and the chromaticity b* of the light control sheet 10 in the transparent state preferably satisfy -6≤a*≤6 and -6≤b*≤6, and more preferably satisfy -3≤a*≤3 and -3≤b*≤3. This makes it easier for the light control sheet 10 in the transparent state to appear colorless and transparent. In particular, with the chromaticity b* of 6 or less, and preferably 3 or less, a yellowish tone of the light control sheet 10 in the transparent state can be said to be suitably suppressed.

Further, when the dichroic dye 22P exhibits black or a color close to black, the chromaticity a* and the chromaticity b* of the light control sheet 10 in the opaque state preferably satisfy -8≤a*≤8 and -8≤b*≤8, and more preferably satisfy -7≤a*≤7 and -7≤b*≤7. This prevents the light control sheet 10 in the opaque state from appearing colored in a color other than black.

### [Method of Producing Light Control Sheet]

A method of producing a light control sheet 10 will be described. First, a first transparent support layer 41 on which a first transparent electrode layer 31 is laminated and a second transparent support layer 42 on which a second transparent electrode layer 32 is laminated are prepared. The transparent electrode layers 31 and 32 may be formed by, for example, a known film formation method such as sputtering.

Next, a coating film for forming a light control layer 20 is formed between the first transparent electrode layer 31 and the second transparent electrode layer 32. The coating film contains a photopolymerizable compound, a liquid crystal compound 22L, a dichroic dye 22P and a photopolymerization initiator. The photopolymerization initiator may contain, in addition to the above-mentioned oxime ester compound, alkylphenone compound and acylphosphine oxide compound, other compounds than these compounds.

Further, spacers 23 may be contained in a coating liquid for forming the coating film, or may be dispersed in a coating film when forming the coating film.

When the laminate in which the coating film is sandwiched is irradiated with light to polymerize the photopolymerizable compound, phase-separation of the liquid crystal composition 22 occurs, and the light control layer 20 is formed. The light for polymerizing the photopolymerizable compound may be ultraviolet light or electron beams. The light for polymerizing the photopolymerizable compound may be applied toward the first transparent support layer 41 or the second transparent support layer 42, or may be applied toward both the first transparent support layer 41 and the second transparent support layer 42. Thus, the light control sheet 10 is formed.

According to the light control sheet of the first embodiment, the following effects can be achieved.
(1) In the light control sheet 10, the domain diameter of 0.7 µm or less ensures a high ratio of the total light transmittance between the transparent state and the opaque state.
(2) As the photopolymerization initiator, at least one selected from the group consisting of oxime ester compounds, alkylphenone compounds and acylphosphine oxide compounds is used. A plurality of ends of a polymer compound contained in the transparent polymer layer 21 include at least one selected from the group consisting of an intramolecular dissociative group of an oxime ester compound, an intramolecular dissociative group of an alkylphenone compound and an intramolecular dissociative group of an acylphosphine oxide compound. With this configuration, a structure of the light control layer 20 in which the liquid crystal composition 22 is held in the domains 21D can be suitably formed.
(3) The photopolymerization initiator contains an oxime ester compound, and a plurality of ends of a polymer compound contained in the transparent polymer layer 21 contain an intramolecular dissociative group of the oxime ester compound. With this configuration, the domain diameter of 0.7 µm or less can be particularly easily formed, and the light control sheet 10 in the transparent state can be suitably prevented from having a yellowish tone.
(4) The photopolymerization initiator contains an alkylphenone compound and an acylphosphine oxide compound, and a plurality of ends of a polymer compound contained in the transparent polymer layer 21 contain an intramolecular dissociative group of the alkylphenone compound and an intramolecular dissociative group of the acylphosphine oxide compound. With this configuration, the domain diameter of 0.7 µm or less can be easily produced, and the light control sheet 10 in the transparent state can be prevented from having a yellowish tone.
(5) The light control sheet 10 in the transparent state satisfies -6≤b*≤6 for the chromaticity b*. This makes it easier for the light control sheet 10 in the transparent state to appear achromatic. Such a light control sheet can be suitably achieved by adopting the configuration of the above (3) or (4).
(6) The light control sheet 10 in the opaque state satisfies -8≤b*≤8 for the chromaticity b*. This makes it easier for the light control sheet 10 in the opaque state to appear achromatic.
(7) The ratio of the total light transmittance in the transparent state to that in the opaque state is 8.0 or greater. This provides good contrast between the transparent state and the opaque state. Therefore, it is possible to sufficiently block visible light in the opaque state, and increase the transparency in the transparent state.
(8) The ratio of the dichroic dye 22P to the transparent polymer layer 21 and the liquid crystal composition 22 is 0.5 mass% or greater and 10 mass% or less. This makes it possible to clearly recognize the difference in color between the transparent state and the opaque state of the light control sheet 10, and suppress precipitation of the dichroic dye 22P and an increase in the production cost of the light control sheet 10.
(9)The ratio of the transparent polymer layer 21 to the transparent polymer layer 21 and the liquid crystal composition 22 is 30 mass% or greater and 60 mass% or less. This ensures the domains 21D to an appropriate extent in the transparent polymer layer 21, and suitably forms a structure of the light control layer 20 in which the liquid crystal composition 22 is dispersed in the transparent polymer layer 21.
(10) The spacers 23 exhibit the same color as that exhibited by the dichroic dye 22P in the opaque state so that the spacers 23 are prevented from being conspicuous. It is also possible to reduce the total light transmittance in the opaque state.

### (Second Embodiment)

A second embodiment of the light control sheet will be described. In production of the light control sheet, a coating film that serves as a light control layer is formed of a coating liquid containing a liquid crystal composition, a photopolymerizable compound and a photopolymerization initiator, and the coating film is irradiated with light to proceed a polymerization reaction of the photopolymerizable compound in the coating film. Accordingly, a polymer structure is formed, and phase-separation of the liquid crystal composition occurs, thereby forming a light control layer.

When the liquid crystal composition contains a dichroic dye, a part of the light energy applied to the coating film is absorbed by the dichroic dye, making it difficult to proceed a polymerization reaction and to induce phase-separation. Although it is possible to solve such problems by increasing the amount of the photopolymerization initiator contained in the coating film, this increases the amount of unreacted photopolymerization initiator contained in the light control layer and the residue of reacted photopolymerization initiator, leading to degradation of the performance of the light control layer, such as optical properties.

Therefore, when the liquid crystal composition contains a dichroic dye, further improvement of the material for the light control layer is desired in in order to smoothly proceed a reaction required for forming the light control layer.

The second embodiment is provided to enable the reaction required for forming a light control layer to proceed smoothly. **In** order to solve the problem, the light control sheet of the second embodiment uses an oxime ester compound as the photopolymerization initiator in addition to the configuration of the light control sheet of the first embodiment. Further, in the second embodiment, the light control layer adopt a polymer-dispersed liquid crystal structure. The following description focuses on differences between the second embodiment and the first embodiment, and configurations which are the same as those of the first embodiment will be referred to by the same reference numbers and the description thereof will be omitted.

### [Configuration of Light Control Sheet]

In the second embodiment, the light control layer 20 has a polymer-dispersed liquid crystal structure. That is, the light control layer 20 includes a transparent polymer layer 21 having a plurality of independent domains 21D, and a liquid crystal composition 22 held in the domains 21D. In other words, the light control layer 20 has a structure in which droplets of liquid crystal are dispersed in a polymer material.

In the second embodiment, since the photopolymerization initiator contains an oxime ester compound, the polymer compound constituting the transparent polymer layer 21 contains a polymer compound containing an intramolecular dissociative group of the oxime ester compound at the end of the molecular structure. The transparent polymer layer 21 may contain a polymer compound having an intramolecular dissociative group of an oxime ester compound at a site other than the end of the molecular structure.

The ratio of the transparent polymer layer 21 to the transparent polymer layer 21 and the liquid crystal composition 22 is preferably 30 mass% or greater and 60 mass% or less, and more preferably 40 mass% or greater and 50 mass% or less. The ratio of the transparent polymer layer 21 within the above range ensures an appropriate size of the domains 21D, and suitably forms a polymer-dispersed liquid crystal structure.

The ratio of the liquid crystal compound 22L to the transparent polymer layer 21 and the liquid crystal composition 22 is preferably 40 mass% or greater and 70 mass% or less, and more preferably 50 mass% or greater and 60 mass% or less. The ratio of the liquid crystal compound 22L within the above range ensures an appropriate size of the domains 21D, and suitably forms a polymer-dispersed liquid crystal structure.

The ratio of the dichroic dye 22P to the transparent polymer layer 21 and the liquid crystal composition 22 is preferably 0.5 mass% or greater and 10 mass% or less, and more preferably 1 mass% or greater and 5 mass% or less. The ratio of the dichroic dye 22P of 0.5 mass% or greater can promote polymerization by using an oxime ester compound as the photopolymerization initiator to a suitable degree and make it easier to clearly recognize the difference in color between the transparent and opaque states of the light control sheet.

The total light transmittance of the light control sheet in the opaque state is preferably 30% or less. This makes it possible to sufficiently block visible light in the opaque state. The total light transmittance is a value obtained by using a measurement method in accordance with JIS K 7361-1:1997 (ISO 1468-1).

The total light transmittance of the light control sheet in the opaque state can be changed by changing the content of the dichroic dye 22P in the light control layer 20 or the thickness of the light control layer 20. Specifically, increasing the ratio of the dichroic dye 22P to the light control layer 20 can reduce the total light transmittance in the opaque state. Further, increasing the thickness of the light control layer 20 can reduce the total light transmittance in the opaque state.

### [Method of Producing Light Control Sheet]

A method of producing a light control sheet will be described. First, a first sheet having a first transparent electrode layer 31 formed on a first transparent support layer 41 and a second sheet having a second transparent electrode layer 32 formed on the second transparent support layer 42 are prepared. The first transparent electrode layer 31 and the second transparent electrode layer 32 are formed by a known thin film formation method such as sputtering or vacuum deposition.

Next, a coating liquid for forming the light control layer 20 is prepared and applied to form a coating film that serves as the light control layer 20 between the transparent electrode layers 31 and 32 of the first sheet and the second sheet, respectively.

The coating liquid contains the above-mentioned photopolymerizable compound, the liquid crystal compound 22L, the dichroic dye 22P and the photopolymerization initiator. The ratio of the photopolymerizable compound to the coating liquid is preferably 30 mass% or greater and 60 mass% or less, and more preferably 40 mass% or greater and 50 mass% or less. The ratio of the liquid crystal compound 22L to the coating liquid is preferably 40 mass% or greater and 70 mass% or less, and more preferably 50 mass% or greater and 60 mass% or less. The ratio of the photopolymerizable compound and the ratio of the liquid crystal compound 22L within the above ranges ensure an appropriate size of the domains 21D in the transparent polymer layer 21 formed, and suitably form a polymer-dispersed liquid crystal structure. This provides the light control layer 20 with good optical properties.

The ratio of the dichroic dye 22P to the coating liquid is preferably 0.5 mass% or greater and 10 mass% or less, and more preferably 1 mass% or greater and 5 mass% or less. The ratio of the dichroic dye 22P of 0.5 mass% or greater can promote polymerization by using an oxime ester compound as the photopolymerization initiator to a suitable degree and make it easier to clearly recognize the difference in color between the transparent and opaque states of the light control sheet. The ratio of the dichroic dye 22P of 10 mass% or less can inhibit precipitation of particles of aggregated dichroic dye 22P.

The ratio of the photopolymerization initiator to the coating liquid is preferably 0.1 mass% or greater and 5 mass% or less, and more preferably 1 mass% or greater and 3 mass% or less. The ratio of the photopolymerization initiator of 0.1 mass% or greater can proceed a polymerization reaction suitably. The ratio of the photopolymerization initiator of 5 mass% or less can suppress excessive promotion of the polymerization reaction and suppress degradation of optical properties due to unreacted photopolymerization initiator remaining in the light control layer 20.

The photopolymerization initiator may contain, in addition to the oxime ester compound, other compounds than the oxime ester compound. Examples of the photopolymerization initiator other than the oxime ester compound include diketone compounds, acetophenone compounds, benzoin compounds, benzophenone compounds and thioxanthone compounds. An example of the photopolymerization initiator other than the oxime ester compound may be benzoin methyl ether, benzoin ethyl ether, benzoin isopropyl ether or cyclohexyl phenyl ketone.

The coating liquid has a lower temperature limit of the isotropic phase of 0°C or higher and lower than 30°C. The lower temperature limit of the isotropic phase is the temperature at which the coating liquid transitions from a nematic phase to an isotropic phase.

The lower temperature limit of the isotropic phase can be adjusted using the type and content of the liquid crystal compound 22L. In particular, the ratio of the liquid crystal compound 22L to the coating liquid of 40 mass% or greater and 70 mass% or less makes it easy to set the lower temperature limit of the isotropic phase to 0°C or higher and lower than 30°C.

The lower temperature limit of the isotropic phase within the above range causes the coating liquid to be an isotropic liquid or to exhibit properties similar to those of an isotropic liquid at room temperature. This suppresses precipitation of the liquid crystal component in the coating film, thereby forming a uniform coating film.

A structure that can be compared to polymer-dispersed liquid crystals is polymer-network liquid crystals having a plurality of interconnected voids in a polymer layer. However, compared to polymer-dispersed liquid crystals, a coating liquid for forming polymer-network liquid crystals contains more liquid crystal compounds and has a higher lower temperature limit of the isotropic phase. Therefore, a coating liquid for forming polymer-network liquid crystals is an anisotropic liquid, that is, in a liquid crystal state, at room temperature, and the properties of the coating liquid significantly differs from those of the present embodiment.

In formation of a coating film, a coating liquid is applied to a transparent electrode layer of one of the first and second sheets to form a coating film, and the other of the first and second sheets is laminated on the coating film to form a laminate with the coating film sandwiched between the first sheet and the second sheet.

The coating liquid can be applied by a known coating method, such as drop casting, ink jetting, gravure coating, spin coating, slit coating, bar coating, flexo coating, die coating, dip coating or roll coating.

Further, spacers 23 may be dispersed in the coating film after the coating film is formed, or may be dispersed in the coating film by being mixed with the coating liquid. When the spacers 23 are mixed with the coating liquid, the ratio of the spacers 23 to the coating liquid may be, for example, approximately 1 mass%.

Next, the laminate of the first sheet, the second sheet and the coating film is irradiated with light of a specific wavelength to proceed polymerization reaction. The light of a specific wavelength described above may be, for example, ultraviolet light. The light may be applied toward the first sheet or the second sheet, or may be applied toward both the first sheet and the second sheet. Accordingly, a polymerization reaction of the photopolymerizable compound proceeds in the coating film, and phase-separation of the droplets of the liquid crystal composition 22 occurs, thereby forming the light control layer 20.

Thus, a laminate including the light control layer 20, the transparent electrode layers 31 and 32, and the transparent support layers 41 and 42 is formed, and external shaping or the like is performed on the laminate as necessary to form a light control sheet.

In the present embodiment, the coating film contains an oxime ester compound as the photopolymerization initiator. Oxime ester compounds have a particularly high sensitivity to light compared to other compounds used as the photopolymerization initiator, that is, the light energy required for a cleavage reaction is small. Therefore, even when a part of the energy of light irradiated to the laminate is absorbed by the dichroic dye 22P, the polymerization reaction of the photopolymerizable compound due to the oxime ester compound is suitably induced. As a result, without increasing the amount of the photopolymerization initiator, or even when the content of the dichroic dye 22P is large, polymerization of the photopolymerizable compound and phase-separation of the liquid crystal composition 22 can proceed suitably.

Specifically, due to suitable progress of the polymerization reaction, it is possible to prevent an increase in the amount of unreacted photopolymerizable compound contained in the liquid crystal composition 22, in other words, an increase in the amount of impurities in the liquid crystal composition 22, in the formed light control layer 20. Since this prevents a decrease in the NI temperature (Nematic-Isotropic transition temperature) of the liquid crystal composition 22, it is possible to prevent narrowing of the temperature range in which the light control sheet can be driven.

Further, due to suitable progress of the polymerization reaction, the domains 21D in the transparent polymer layer 21 are prevented from becoming excessively large, preventing a decrease in light scattering in the opaque state. Since this prevents a decrease in the component of light absorbed by the dichroic dye, it is possible to suppress degradation of the optical properties, such as total light transmittance, of the light control sheet in the opaque state.

In addition, even when a photopolymerization initiator other than an oxime ester compound is used in the first embodiment, the production method of the second embodiment may be used, that is, in the coating liquid for forming the light control layer 20, a lower temperature limit of the isotropic phase may be set to 0°C or higher and lower than 30°C, and the light control layer 20 may have a polymer-dispersed liquid crystal structure.

Further, the configuration of the second embodiment may be used when the domain diameter is greater than 0.7 µm. In this case as well, the problem of the second embodiment can be solved.

According to the light control sheet and the production method thereof of the second embodiment, the following effects can be achieved.

(11) Since an oxime ester compound is used as the photopolymerization initiator, the polymerization reaction and the phase-separation of the liquid crystal composition can proceed suitably in formation of the light control layer 20. Therefore, it is possible to suppress degradation of the performance of the light control sheet, such as optical properties and temperature range in which the light control sheet can be driven.

(12) In the coating liquid for forming the light control layer 20, the lower temperature limit of the isotropic phase is 0°C or higher and lower than 30°C. Since this causes the coating liquid to exhibit the properties of the isotropic liquid or close to the isotropic liquid, a uniform coating film is likely to be obtained, thereby suitably forming a polymer-dispersed liquid crystal structure.

(13) In the coating liquid for forming the light control layer 20, the ratio of the liquid crystal compound is 40 mass% or greater and 70 mass% and less, and the ratio of the photopolymerizable compound is 30 mass% or greater and 60 mass% or less. Further, in the light control layer 20, the ratio of the liquid crystal compound 22L to the transparent polymer layer 21 and the liquid crystal composition 22 is 40 mass% or greater and 70 mass% or less, and the ratio of the transparent polymer layer 21 is 30 mass% or greater and 60 mass% or less. With this configuration, an appropriate size of the domains 21D is ensured in the transparent polymer layer 21, thereby suitably forming a polymer-dispersed liquid crystal structure. This provides the light control sheet with good optical properties. That is, the domains 21D can be prevented from becoming excessively large, thereby preventing a decrease in light scattering in the opaque state and preventing a decrease in the component of light absorbed by the dichroic dye 22P, and the domains 21D can also be prevented from becoming excessively small, thereby preventing a decrease in the degree of freedom of movement of the liquid crystal compound 22L in response to the applied voltage.

(14) The ratio of the dichroic dye 22P to the coating liquid for forming the light control layer 20 is 0.5 mass% or greater and 10 mass% or less. Further, in the light control layer 20, the ratio of the dichroic dye 22P to the transparent polymer layer 21 and the liquid crystal composition 22 is 0.5 mass% or greater and 10 mass% or less. The ratio of the dichroic dye 22P of 0.5 mass% or greater can promote polymerization by using an oxime ester compound as the photopolymerization initiator to a suitable degree and make it easier to clearly recognize the difference in color between the transparent and opaque states of the light control sheet. Further, the ratio of the dichroic dye 22P of 10 mass% or less can inhibit precipitation of particles of aggregated dichroic dye 22P.

(15) In the coating liquid for forming the light control layer 20, the ratio of the photopolymerization initiator is 0.1 mass% or greater and 5 mass% or less. The ratio of the photopolymerization initiator of 0.1 mass% or greater can proceed a polymerization reaction suitably. The ratio of the photopolymerization initiator of 5 mass% or less can suppress excessive promotion of the polymerization reaction and suppress degradation of optical properties due to unreacted photopolymerization initiator remaining in the light control layer 20.

(16) The total light transmittance of the light control sheet in the opaque state of 30% or less can sufficiently block visible light in the opaque state.

### (Examples)

The above-mentioned light control sheet will be described by using specific examples.

### <Analysis of Relationship between Domain Diameter, Type of Photopolymerization Initiator and Properties of Light Control Sheet>

Light control sheets of examples and comparative examples were prepared to analyze the relationship between the domain diameter, the type of photopolymerization initiator and the properties of light control sheet.

### [Example 1]

A coating liquid for forming a light control layer was prepared by mixing a liquid crystal compound, a dichroic dye, a photopolymerizable compound and a photopolymerization initiator. The details of the materials are as below. The ratios of each material in the coating liquid were 52.1 mass% of the liquid crystal compound, 4.0 mass% of the dichroic dye, 42.4 mass% of the photopolymerizable compound and 1.5 mass% of the photopolymerization initiator.
- Liquid crystal compound: Cyanobiphenyl compound
- Dichroic dye: Black dichroic dye (YH-428, manufactured by Mitsui Fine Chemicals, Inc.)
- Photopolymerizable compound: A mixture of isobornyl acrylate, pentaerythritol triacrylate and urethane acrylate
- Photopolymerization initiator: Oxime ester compound (a mixture of (E)-(8-{[(acetyloxy)imino][2-(2,2,3,3-tetrafluoropropoxy)phenyl]methyl}-11-(2-ethylhexyl)-11H-benzo[a]carbazole-5-yl)(2,4,6-trimethylphenyl)methanone and (Z)-(8-{[(acetyloxy)imino][2-(2,2,3,3-tetrafluoropropoxy)phenyl]methyl}-11-(2-ethylhexyl)-11H-benzo[a]carbazole-5-yl)(2,4,6-trimethylphenyl)methanone)) (Irgacure OXE03, manufactured by BASF Japan Ltd.)

A first transparent electrode layer was formed by sputtering on a first transparent support layer to prepare a laminate of the first transparent support layer and the first transparent electrode layer as a first sheet. Similarly, a second transparent electrode layer was formed by sputtering on a second transparent support layer to prepare a laminate of the second transparent support layer and the second transparent electrode layer as a second sheet. Each of the first transparent support layer and the second transparent support layer was made of polyethylene terephthalate having a thickness of 125 µm. Each of the first transparent electrode layer and the second transparent electrode layer was made of indium tin oxide having a thickness of 30 nm.

The above-mentioned coating liquid was applied to the first sheet to form a coating film on the first transparent electrode layer, and spacers were further dispersed in the coating film. The spacers used were black spherical particles made of polymethyl methacrylate. The particle size of the spacers was 25 µm. Then, the second sheet was laminated and bonded to the first sheet on which the coating film was formed to obtain a laminate of the first sheet, the coating film and the second sheet.

Next, the first transparent support layer of the laminate was irradiated with ultraviolet light of 365 nm to form a light control layer, thereby obtaining a light control sheet of Example 1. The intensity of the ultraviolet light was 28 mW/cm², and the irradiation time of the ultraviolet light was 120 seconds.

### [Example 2]

The photopolymerization initiator in Example 1 was changed to an α-aminoalkylphenone compound (2-methyl-1-[4-(methylthio)phenyl]-2-morpholinopropan-1-one) (Irgacure 907, manufactured by BASF Japan Ltd.) and an acylphosphine oxide compound (diphenyl(2,4,6-trimethylbenzoyl)phosphine oxide) (Irgacure TPO, manufactured by BASF Japan Ltd.). The ratios of each material in the coating liquid were 51.3 mass% of the liquid crystal compound, 4.0 mass% of the dichroic dye, 41.7 mass% of the photopolymerizable compound, 1.5 mass% of the photopolymerization initiator Irgacure 907 and 1.5 mass% of the photopolymerization initiator Irgacure TPO. The intensity of the ultraviolet light was 7.2 mW/cm², and the irradiation time of the ultraviolet light was 120 seconds.

### [Example 3]

The intensity of the ultraviolet light in Example 1 was changed to 7.2 mW/cm². The irradiation time of the ultraviolet light was 120 seconds.

### [Example 4]

The photopolymerization initiator in Example 1 was changed to an oxime ester compound (Irgacure OXE04, manufactured by BASF Japan Ltd.). The ratios of each material in the coating liquid were the same as those in Example 1. The intensity of the ultraviolet light was 7.2 mW/cm², and the irradiation time of the ultraviolet light was 120 seconds.

### [Example 5]

The photopolymerization initiator in Example 1 was changed to an oxime ester compound (1,2-octanedione,1-[4-(phenylthio)phenyl]-, 2-(O-benzoyloxime)) (Irgacure OXE01, manufactured by BASF Japan Ltd.). The ratios of each material in the coating liquid were the same as those in Example 1. The intensity of the ultraviolet light was 7.2 mW/cm², and the irradiation time of the ultraviolet light was 120 seconds.

### [Comparative Example 1]

The photopolymerization initiator in Example 1 was changed to an acylphosphine oxide compound (diphenyl (2,4,6-trimethylbenzoyl)phosphine oxide) (Irgacure TPO, manufactured by BASF Japan Ltd.). The ratios of each material in the coating liquid were the same as those in Example 1. The intensity of the ultraviolet light was 7.2 mW/cm², and the irradiation time of the ultraviolet light was 120 seconds.

### [Comparative Example 2]

The photopolymerization initiator in Example 1 was changed to a benzyl ketal compound (2,2-dimethoxy-2-phenyl acetophenone) (Irgacure 651, manufactured by BASF Japan Ltd.). The ratios of each material in the coating liquid were the same as those in Example 1. The intensity of the ultraviolet light was 7.2 mW/cm², and the irradiation time of the ultraviolet light was 120 seconds.

### [Comparative Example 3]

The photopolymerization initiator in Example 1 was changed to an α-hydroxyalkylphenone compound (1-hydroxycyclohexyl phenyl ketone) (Irgacure 184, manufactured by BASF Japan Ltd.). The ratios of each material in the coating liquid were the same as those in Example 1. The intensity of the ultraviolet light was 7.2 mW/cm², and the irradiation time of the ultraviolet light was 120 seconds.

### [Comparative Example 4]

The photopolymerization initiator in Example 1 was changed to an α-hydroxyacetophenone compound (2-hydroxy-2-methylpropiophenone) (Irgacure 1173, manufactured by BASF Japan Ltd.). The ratios of each material in the coating liquid were the same as those in Example 1. The intensity of the ultraviolet light was 7.2 mW/cm², and the irradiation time of the ultraviolet light was 120 seconds.

### [Comparative Example 5]

The photopolymerization initiator in Example 1 was changed to an α-aminoalkylphenone compound (2-methyl-1-[4-(methylthio)phenyl]-2-morpholinopropan-1-one) (Irgacure 907, manufactured by BASF Japan Ltd.). The ratios of each material in the coating liquid were the same as those in Example 1. The intensity of the ultraviolet light was 7.2 mW/cm², and the irradiation time of the ultraviolet light was 120 seconds.

### [Evaluation Method]

### - Measurement of domain diameter

For each of the examples and comparative examples, a cross-sectional image of the light control sheet in the thickness direction was obtained using a scanning electron microscope. The area of each domain included in the cross-sectional image was calculated using image processing software ImageJ, and the diameter of a circle having the same area as that of the domain was defined as the domain diameter of the domain. Then, the average value of the domain diameters of the domains included in the cross-sectional image for each light control sheet was defined as the domain diameter of the light control sheet.

### - Measurement of total light transmittance

For each of the examples and comparative examples, the total light transmittance of the light control sheet in each of the opaque state and the transparent state was measured by a method in accordance with JIS K 7361-1.

### - Measurement of chromaticity

For each of the examples and comparative examples, the chromaticity a* and chromaticity b* of the light control sheet in each of the opaque state and the transparent state were measured by a method in accordance with JIS Z 8781-4.

### - Visual evaluation

For each of the examples and comparative examples, the transmittance ratio and the tone in the opaque state and the transparent state were evaluated by visual inspection.

In evaluation of the transmittance ratio, the contrast in transparency of the light control sheet between the opaque state and the transparent state was rated on three levels, with "good" when the contrast was good, "fair" when the contrast was worse than "good" but acceptable, and "poor" when the contrast was unacceptably poor.

In evaluation of the tone, it was rated as "good" when no tone other than achromatic colors ranging from white to black was observed on the light control sheet in both the opaque state and the transparent state, and "poor" when a tone other than achromatic colors was observed on the light control sheet in at least one of the opaque state and the transparent state.

### [Evaluation Results]

Table 1 shows the results of the domain diameter, the total light transmittance TTb, the chromaticity a* and the chromaticity b* in the opaque state, the total light transmittance TTa, the chromaticity a* and the chromaticity b* in the transparent state, the ratio TTa/TTb, and the visual evaluation of transmittance ratio and tone for each of the examples and comparative examples. The opaque state is the state where no driving voltage is applied, and the transparent state is the state where 100V AC voltage is applied as the driving voltage.

**[Table 1]**

| | Domain diameter (µm) | Applied voltage: 0V | | | Applied voltage: 100V | | | TTa/TTb | Visual evaluation | |
|---|---|---|---|---|---|---|---|---|---|---|
| | | TTb (%) | Chromaticity | | TTa (%) | Chromaticity | | | Transmittance ratio | Tone |
| | | | a* | b* | | a* | b* | | | |
| Ex. 1 | 0.32 | 3.8 | 3.5 | -7.6 | 48.6 | 1.9 | -0.5 | 12.7 | good | good |
| Ex. 2 | 0.38 | 5.9 | -4.0 | -6.4 | 50.2 | -3.8 | 5.9 | 8.6 | good | good |
| Ex. 3 | 0.53 | 5.0 | 3.3 | -5.9 | 51.0 | 2.1 | 1.6 | 10.2 | good | good |
| Ex. 4 | 0.55 | 5.3 | 3.2 | -6.8 | 49.9 | 1.6 | 2.2 | 9.4 | good | good |
| Ex. 5 | 0.63 | 5.8 | 3.3 | -6.1 | 47.5 | 2.8 | 1.9 | 8.1 | good | good |
| Comp.Ex. 1 | 0.84 | 6.4 | -1.5 | -7.3 | 49.1 | -2.3 | 6.7 | 7.7 | fair | poor |
| Comp.Ex. 2 | 1.26 | 8.2 | 1.3 | -6.5 | 52.3 | -0.1 | 3.4 | 6.4 | fair | good |
| Comp.Ex. 3 | 2.29 | 12.7 | 3.0 | -8.9 | 51.0 | 1.5 | 0.4 | 4.0 | poor | poor |
| Comp.Ex. 4 | 2.68 | 13.3 | 3.1 | -8.4 | 52.8 | 1.5 | 0.8 | 4.0 | poor | poor |

As shown in Table 1, regarding the total light transmittance, Examples 1 to 5, in which the domain diameter is 0.7 µm or less, show that the ratio TTa/TTb is 8.0 or greater, and the visual evaluation is good. In particular, the total light transmittance TTb in the opaque state is low compared to that of the comparative examples. With reference to the total light transmittance of the examples and comparative examples, the ratio TTa/TTb tends to increase with a decrease in the domain diameter, and in particular, the ratio TTa/TTb abruptly changes before and after the domain diameter of approximately 1 µm. Therefore, it can be said that when the domain diameter is 0.7 µm or less, a particularly good contrast can be achieved between the opaque state and the transparent state.

Regarding the tone, Examples 1 to 5 show that -6≤a*≤6 and -6≤b*≤6 are satisfied in the transparent state and -8≤a*≤8 and -8≤b*≤8 are satisfied in the opaque state. In the visual evaluation, no tone other than achromatic colors were observed on the light control sheet in both the opaque state and the transparent state. Therefore, it can be said that in Examples 1 to 5, the light control sheet is suitably prevented from appearing colored.

Specifically, in Examples 1 and 3 to 5, in which an oxime ester compound is used as the photopolymerization initiator, -3≤a*≤3 and -3≤b*≤3 are satisfied in the transparent state, and tones other than achromatic colors are significantly suppressed. Therefore, it was found that using an oxime ester compound as the photopolymerization initiator can reduce the domain diameter and suitably suppress a yellowish tone in the transparent state.

Further, in Comparative example 1, in which an acylphosphine oxide compound is used as the photopolymerization initiator, the domain diameter is small but the yellowish tone in the transparent state is stronger compared to Comparative examples 2 to 5, in which an alkylphenone compound is singly used as the photopolymerization initiator. On the other hand, in Example 2, in which a mixture of an acylphosphine oxide compound and an alkylphenone compound is used as the photopolymerization initiator, b* in the transparent state is closer to 0 than in Comparative example 1. That is, it was found that using a mixture of an acylphosphine oxide compound and an alkylphenone compound can reduce the domain diameter and suppress a yellowish tone in the transparent state.

### <Analysis of Relationship between Domain Diameter, Properties of Coating Liquid and Properties of Light Control Sheet>

Light control sheets of Test examples were prepared to analyze the relationship between the type of photopolymerization initiator, the properties of coating liquid and the properties of light control sheet.

### [Material and Production Method of Light Control Sheet]

A coating liquid for forming a light control layer was prepared by mixing a liquid crystal compound, a dichroic dye, a photopolymerizable compound and a photopolymerization initiator. The details of the materials are as below.
- Liquid crystal compound: Cyanobiphenyl compound
- Dichroic dye: Black dichroic dye (YH-428, manufactured by Mitsui Fine Chemicals, Inc.)
- Photopolymerizable compound: A mixture of isobornyl acrylate, pentaerythritol triacrylate and urethane acrylate
- Photopolymerization initiator: One or more of the following 8 types
   Photopolymerization initiator I1: Oxime ester compound (1,2-octanedione, 1-[4-(phenylthio)phenyl]-, 2-(O-benzoyloxime)) (Irgacure OXE01, manufactured by BASF Japan Ltd.)
   Photopolymerization initiator I2: Oxime ester compound (a mixture of (E)-(8-[(acetyloxy)imino][2-(2,2,3,3-tetrafluoropropoxy)phenyl]methyl}-11-(2-ethylhexyl)-11H-benzo[a]carbazole-5-yl)(2,4,6-trimethylphenyl)methanone and (Z)-(8-{[(acetyloxy)imino][2-(2,2,3,3-tetrafluoropropoxy)phenyl]methyl}-11-(2-ethylhexyl)-11H-benzo[a]carbazole-5-yl)(2,4,6-trimethylphenyl)methanone)) (Irgacure OXE03, manufactured by BASF Japan Ltd.)
   Photopolymerization initiator I3: Oxime ester compound (Irgacure OXE04, manufactured by BASF Japan Ltd.)
   Photopolymerization initiator I4: α-hydroxyalkylphenone compound (1-hydroxycyclohexyl phenyl ketone) (Irgacure 184, manufactured by BASF Japan Ltd.)
   Photopolymerization initiator I5: Acylphosphine oxide compound (diphenyl (2,4,6-trimethylbenzoyl)phosphine oxide) (Irgacure TPO, manufactured by BASF Japan Ltd.)
   Photopolymerization initiator I6: α-animoalkylphenone compound (2-methyl-1-[4-(methylthio)phenyl]-2-morpholinopropan-1-one) (Irgacure 907, manufactured by BASF Japan Ltd.)
   Photopolymerization initiator I7: Benzyl ketal compound (2,2-dimethoxy-2-phenyl acetophenone) (Irgacure 651, manufactured by BASF Japan Ltd.)
   Photopolymerization initiator I8: α-hydroxyacetophenone compound (2-hydroxy-2-methylpropiophenone) (Irgacure 1173, manufactured by BASF Japan Ltd.)

A first transparent electrode layer was formed by sputtering on a first transparent support layer to prepare a laminate of the first transparent support layer and the first transparent electrode layer as a first sheet. Similarly, a second transparent electrode layer was formed by sputtering on a second transparent support layer to prepare a laminate of the second transparent support layer and the second transparent electrode layer as a second sheet. Each of the first transparent support layer and the second transparent support layer was made of polyethylene terephthalate having a thickness of 125 µm. Each of the first transparent electrode layer and the second transparent electrode layer was made of indium tin oxide having a thickness of 30 nm.

The coating liquid was applied to the first sheet by drop casting to form a coating film on the first transparent electrode layer, and spacers were further dispersed in the coating film. The coating film had a thickness of 25 µm. The spacers used were spherical particles made of polymethyl methacrylate. The particle size of the spacers was 20 µm. Then, the second sheet was laminated and bonded to the first sheet on which the coating film was formed to obtain a laminate of the first sheet, the coating film and the second sheet.

Next, the first transparent support layer of the laminate was irradiated with ultraviolet light of 365 nm to form a light control layer, thereby obtaining a light control sheet. The intensity of the ultraviolet light was 12 mW/cm², and the irradiation time of the ultraviolet light was 120 seconds.

### [Configuration of Test Examples]

Using the above-mentioned materials and production method, Test Examples 1 to 8 and 13 to 17 were obtained by changing the compounding ratio of the liquid crystal compound, the dichroic dye, the photopolymerizable compound and the photopolymerization initiator in the coating liquid. Test Examples 1 to 6, 8 and 13 to 17 were obtained by using black spacers, and Test Example 7 was obtained by using white transparent spacers. Further, the above Examples 1, 3, 4 and 5 were listed as Test Examples 9, 10, 11 and 12, respectively, and the above Example 2, Comparative Examples 1, 2, 3, 4 and 5 were listed as Test Examples 18, 19, 20, 21, 22 and 23, respectively. The compounding ratio of the coating liquid and the spacer color in each test example are shown in Tables 2 and 3.

**[Table 2]**

| | | | Test Ex. 1 | Test Ex. 2 | Test Ex. 3 | Test Ex. 4 | Test Ex. 5 | Test Ex. 6 | Test Ex. 7 | Test Ex. 8 | Test Ex. 9 | Test Ex. 10 | Test Ex. 11 | Test Ex. 12 |
|---|---|---|---|---|---|---|---|---|---|---|---|---|---|---|
| | Liquid crystal compound | | 55.0 | 42.0 | 67.0 | 55.0 | 57.0 | 51.5 | 55.0 | 57.0 | 52.1 | 52.1 | 52.1 | 52.1 |
| | Dichroic dye | | 3.0 | 3.0 | 3.0 | 3.0 | 1.0 | 4.5 | 3.0 | 0.3 | 4.0 | 4.0 | 4.0 | 4.0 |
| | Photopolymerizable compound | | 38.0 | 54.0 | 26.0 | 40.0 | 40.0 | 40.0 | 38.0 | 39.7 | 42.4 | 42.4 | 42.4 | 42.4 |
| | Photopolymerization initiator | 11 | 3.0 | 1.0 | 4.0 | 1.0 | 1.0 | 3.0 | 3.0 | 3.0 | 0.0 | 0.0 | 0.0 | 1.5 |
| Coating liquid compounding ratio (mass%) | | 12 | 0.0 | 0.0 | 0.0 | 0.0 | 0.0 | 0.0 | 0.0 | 0.0 | 1.5 | 1.5 | 0.0 | 0.0 |
| | | 13 | 0.0 | 0.0 | 0.0 | 0.0 | 0.0 | 0.0 | 0.0 | 0.0 | 0.0 | 0.0 | 1.5 | 0.0 |
| | | 14 | 1.0 | 0.0 | 0.0 | 1.0 | 1.0 | 0.0 | 1.0 | 0.0 | 0.0 | 0.0 | 0.0 | 0.0 |
| | | 15 | 0.0 | 0.0 | 0.0 | 0.0 | 0.0 | 1.0 | 0.0 | 0.0 | 0.0 | 0.0 | 0.0 | 0.0 |
| | | 16 | 0.0 | 0.0 | 0.0 | 0.0 | 0.0 | 0.0 | 0.0 | 0.0 | 0.0 | 0.0 | 0.0 | 0.0 |
| | | 17 | 0.0 | 0.0 | 0.0 | 0.0 | 0.0 | 0.0 | 0.0 | 0.0 | 0.0 | 0.0 | 0.0 | 0.0 |
| | | 18 | 0.0 | 0.0 | 0.0 | 0.0 | 0.0 | 0.0 | 0.0 | 0.0 | 0.0 | 0.0 | 0.0 | 0.0 |
| Spacer color | | | black | black | black | black | black | black | white | black | black | black | black | black |
| ISO temperature (°C) | | | 12.0 | 2.3 | 25.0 | 12.0 | 8.0 | 10.0 | 12.0 | 11.0 | 11.0 | 11.0 | 11.0 | 11.0 |
| Evaluation | Haze | | good | good | good | good | good | good | good | good | good | good | good | good |
| | Total light transmittance (%) | | 5.7 | 4.5 | 7.0 | 5.7 | 25.0 | 2.5 | 6.0 | 60.0 | 3.8 | 5.0 | 5.3 | 5.8 |
| | Unevenness | | good | good | good | good | good | good | good | good | good | good | good | good |
| | NI temperature | | good | good | good | good | good | good | good | fair | good | good | good | good |

**[Table 3]**

| | | | Test Ex. 13 | Test Ex. 14 | Test Ex. 15 | Test Ex. 16 | Test Ex. 17 | Test Ex. 18 | Test Ex. 19 | Test Ex. 20 | Test Ex. 21 | Test Ex. 22 | Test Ex. 23 |
|---|---|---|---|---|---|---|---|---|---|---|---|---|---|
| | Liquid crystal compound | | 55.0 | 55.0 | 72.0 | 36.0 | 55.0 | 51.3 | 52.1 | 52.1 | 52.1 | 52.1 | 52.1 |
| | Dichroic dye | | 3.0 | 3.0 | 3.0 | 3.0 | 1.5 | 4.0 | 4.0 | 4.0 | 4.0 | 4.0 | 4.0 |
| | Photopolymerizable compound | | 38.0 | 38.0 | 21.0 | 60.0 | 39.5 | 41.7 | 42.4 | 42.4 | 42.4 | 42.4 | 42.4 |
| | Photopolymerization initiator | 11 | 0.0 | 0.0 | 4.0 | 1.0 | 0.0 | 0.0 | 0.0 | 0.0 | 0.0 | 0.0 | 0.0 |
| Coating liquid compounding ratio (mass%) | | 12 | 0.0 | 0.0 | 0.0 | 0.0 | 0.0 | 0.0 | 0.0 | 0.0 | 0.0 | 0.0 | 0.0 |
| | | 13 | 0.0 | 0.0 | 0.0 | 0.0 | 0.0 | 0.0 | 0.0 | 0.0 | 0.0 | 0.0 | 0.0 |
| | | 14 | 4.0 | 4.0 | 0.0 | 0.0 | 4.0 | 0.0 | 0.0 | 0.0 | 1.5 | 0.0 | 0.0 |
| | | 15 | 0.0 | 0.0 | 0.0 | 0.0 | 0.0 | 1.5 | 1.5 | 0.0 | 0.0 | 0.0 | 0.0 |
| | | 16 | 0.0 | 0.0 | 0.0 | 0.0 | 0.0 | 1.5 | 0.0 | 0.0 | 0.0 | 0.0 | 1.5 |
| | | 17 | 0.0 | 0.0 | 0.0 | 0.0 | 0.0 | 0.0 | 0.0 | 1.5 | 0.0 | 0.0 | 0.0 |
| | | 18 | 0.0 | 0.0 | 0.0 | 0.0 | 0.0 | 0.0 | 0.0 | 0.0 | 0.0 | 1.5 | 0.0 |
| Spacer color | | | black | black | black | black | black | black | black | black | black | black | black |
| ISO temperature (°C) | | | 12.0 | 13.0 | 41.0 | -5.0 | 12.0 | 11.0 | 11.0 | 11.0 | 11.0 | 11.0 | 11.0 |
| Evaluation | Haze | | good | good | good | poor | good | good | good | good | poor | poor | poor |
| | Total light transmittance (%) | | 15.0 | 7.0 | 15.0 | 35.0 | 31.0 | 5.9 | 6.4 | 8.2 | 12.7 | 13.3 | 13.0 |
| | Unevenness | | good | good | poor | good | good | good | good | good | good | good | good |
| | NI temperature | | poor | poor | good | poor | poor | poor | poor | poor | poor | poor | poor |

### [Evaluation of Properties]

The measurement and evaluation of the following properties were performed for the coating liquid and the light control sheet of each test example.

### - Lower temperature limit of isotropic phase of coating liquid

The coating liquid of each test example was gradually cooled from the temperature at which it exhibited an isotropic phase to measure the temperature at which the liquid crystal component began to precipitate, and the measured temperature was set as the lower temperature limit of the isotropic phase (ISO temperature). The ISO temperature of each test example is shown in Tables 2 and 3.

### - Haze in transparent state

An AC voltage of 100V was applied as a driving voltage to the light control sheet of each test example to turn it to the transparent state, and the haze in the transparent state was measured using a haze meter (NDH2000, manufactured by Nippon Denshoku Industries Co., Ltd.). The haze was measured in accordance with JIS K 7136.

The evaluation results of the haze in the transparent state are shown in Tables 2 and 3. In the evaluation, the haze of 10% or less was rated as "good," and the haze exceeding 10% was rated as "poor."

### - Total light transmittance in opaque state

The total light transmittance of the light control sheet of each test example in the opaque state where no driving voltage was applied was measured by a method in accordance with JIS K 7361-1. The measurement results are shown in Tables 2 and 3.

### - Unevenness of coating film

In production of the light control sheet, a surface of the coating film of each test example was visually observed for the presence or absence of stripe unevenness. This unevenness occurs due to precipitation of the liquid crystal component on the coating film surface. The observation results are shown in Tables 2 and 3, with "good" when no unevenness occurred, and "poor" when unevenness occurred.

### - NI temperature

In each test example, the NI temperature of the liquid crystal composition constituting the formed light control layer was measured. The measured NI temperature of the liquid crystal composition was compared with the NI temperature of the liquid crystal compound alone, and the difference (NI temperature difference) was calculated. The evaluation results of the NI temperature are shown in Tables 2 and 3. In the evaluation, the NI temperature difference within 20°C was rated as "good," the NI temperature difference greater than 20°C and 25°C or less was rated as "fair," and the NI temperature difference greater than 25°C was rated as "poor."

### [Evaluation Results]

As shown in Tables 2 and 3, in Test Examples 13, 14 and 17 to 23, in which the photopolymerization initiator does not contain an oxime ester compound, the NI temperature of the liquid crystal composition constituting the light control layer is significantly lower than the NI temperature of the liquid crystal compound alone, with the difference being greater than 25°C. Since no oxime ester compound is contained in Test Examples 13, 14 and 17 to 23, the polymerization reaction is less likely to proceed, increasing the amount of unreacted photopolymerizable compound in the liquid crystal composition of the light control layer, resulting in a significant decrease in the NI temperature of the liquid crystal composition.

On the other hand, in Test Examples 1 to 12, in which the photopolymerization initiator contains an oxime ester compound, the difference between the NI temperature of the liquid crystal composition constituting the light control layer and the NI temperature of the liquid crystal compound alone is within 25°C. That is, it is suggested that, by using an oxime ester compound as the photopolymerization initiator, the polymerization reaction starts with high sensitivity to light energy, decreasing the amount of unreacted photopolymerizable compound remaining in the liquid crystal composition of the light control layer, thereby suppressing a decrease in the NI temperature.

Further, in the test examples in which the photopolymerization initiator does not contain an oxime ester compound, the total light transmittance in the opaque state tends to be large compared to that in the test examples in which the photopolymerization initiator contains an oxime ester compound. When the photopolymerization initiator does not contain an oxime ester compound, the polymerization reaction is less likely to proceed, and thus the domains defined in the transparent polymer layer are likely to become large, resulting in a decrease in light scattering in the opaque state and a decrease in the component of light absorbed by the dichroic dye.

In Test Example 15, the ratio of the liquid crystal compound to the coating liquid exceeds 70 mass%, and the lower temperature limit of the isotropic phase of the coating liquid exceeds 40°C. That is, the coating liquid of Test Example 15 is an anisotropic liquid in formation of a coating film, and the liquid crystal component is likely to precipitate on the coating film surface. This is thought to cause unevenness on the coating film surface, making it difficult to obtain a uniform surface of the light control layer. Further, due to the large ratio of the liquid crystal compound, the domains defined in the transparent polymer layer tend to be large, and thus the total light transmittance in the opaque state is slightly greater in Test Example 15.

In Test Example 16, the ratio of the liquid crystal compound to the coating liquid is less than 40 mass%, and the lower temperature limit of the isotropic phase of the coating liquid is less than 0°C. Test Example 16 shows that the optical properties, such as haze in the transparent state and total light transmittance in the opaque state, are low. In Test Example 16, due to the small ratio of the liquid crystal compound, the domains defined in the transparent polymer layer tend to be small, reducing the degree of freedom of movement of the liquid crystal compound in response to the applied voltage, resulting in a decrease in the NI temperature and degradation of the optical properties.

In Test Examples 1 to 14 and 17 to 23, in contrast to Test Examples 15 and 16, the compounding ratio of the liquid crystal compound in the coating liquid is 40 mass% or greater and 70 mass% or less, and the lower temperature limit of the isotropic phase of the coating liquid is 0°C or higher and lower than 30°C. Therefore, in Test Examples 1 to 14 and 17 to 23, the coating film is an isotropic liquid in formation of a coating film, which suppresses unevenness on the coating film surface. In Test Examples 1 to 12, the domains are formed in the transparent polymer layer in appropriate sizes, which provides good optical properties.

Comparing Test Examples 1 to 3, the greater the ratio of the liquid crystal compound, the higher the lower temperature limit of the isotropic phase of the coating liquid and the greater the total light transmittance in the opaque state. Further, comparing Test Examples 1, 5 and 6, the greater the ratio of the dichroic dye, the lower the total light transmittance in the opaque state. Further, comparing Test Examples 1 and 7, the total light transmittance in the opaque state is lower when black spacers having the same color as the dichroic dye are used.

In Test Example 8, compared to Test Examples 1 to 7, the difference between the NI temperature of the liquid crystal composition constituting the light control layer and the NI temperature of the liquid crystal compound alone is slightly larger. In Test Example 8, in which the ratio of the dichroic dye is less than 0.5 mass%, that is, the content of the dichroic dye is significantly smaller than the other test examples, the absorption of light energy by the dichroic dye in polymerization is small. Therefore, since the photopolymerization initiator which is an oxime ester compound becomes excessively sensitive and causes the polymerization reaction to proceed excessively, the domains defined in the transparent polymer layer tend to be small, resulting in a decrease in the NI temperature.

Thus, the sensitivity of the oxime ester compound as the photopolymerization initiator tends to be excessive when the liquid crystal composition contains no dichroic dye or the dichroic dye content in the liquid crystal composition is small. The ratio of the dichroic dye of 0.5 mass% or greater is effective for the polymerization reaction due to the use of an oxime ester compound as the photopolymerization initiator and for the phase-separation of the liquid crystal composition to proceed suitably.

## Claims

1. A light control sheet comprising:
a light control layer including a transparent polymer layer containing a plurality of domains, and a liquid crystal composition filling the domains, the liquid crystal composition containing a liquid crystal compound and a dichroic dye; and
a pair of transparent electrode layers sandwiching the light control layer,
the light control sheet being configured to change alignment of the liquid crystal compound and the dichroic dye in response to a change in potential difference between the pair of transparent electrode layers, thereby switching from a colored opaque state to a transparent state, wherein
the domains have an average diameter of 0.7 µm or less.

2. The light control sheet according to claim 1, wherein
the light control sheet in the transparent state satisfies -6<b*≤6 for chromaticity b* in the CIE1976 (L*a*b*) color system.

3. The light control sheet according to claim 1 or 2, wherein
the transparent polymer layer contains a polymer compound having an end, and
a plurality of the ends in the transparent polymer layer include at least one selected from the group consisting of an intramolecular dissociative group of an oxime ester compound, an intramolecular dissociative group of an alkylphenone compound and an intramolecular dissociative group of an acylphosphine oxide compound.

4. The light control sheet according to claim 3, wherein
a plurality of the ends in the transparent polymer layer include an intramolecular dissociative group of an oxime ester compound.

5. The light control sheet according to claim 3, wherein
a plurality of the ends in the transparent polymer layer include an intramolecular dissociative group of an alkylphenone compound and an intramolecular dissociative group of an acylphosphine oxide compound.

6. The light control sheet according to claim 5, wherein
the alkylphenone compound is an α-aminoalkylphenone compound.

7. The light control sheet according to any one of claims 1 to 3, wherein
a ratio of the liquid crystal compound to the transparent polymer layer and the liquid crystal composition is 40 mass% or greater and 70 mass% or less, and
the transparent polymer layer contains a polymer compound having an intramolecular dissociative group of an oxime ester compound at an end of a molecular structure.

8. The light control sheet according to claim 7, wherein
the polymer compound has a skeleton derived from a (meth)acrylate.

9. The light control sheet according to any one of claims 1 to 8, wherein
the light control sheet in the opaque state satisfies -8≤b*≤8 for chromaticity b* in the CIE1976 (L*a*b*) color system.

10. The light control sheet according to any one of claims 1 to 9, wherein
a ratio of a total light transmittance of the light control sheet in the transparent state to a total light transmittance of the light control sheet in the opaque state is 8.0 or greater.

11. The light control sheet according to any one of claims 1 to 10, wherein
a total light transmittance in the opaque state is 30% or less.

12. The light control sheet according to any one of claims 1 to 11, wherein
a ratio of the dichroic dye to the transparent polymer layer and the liquid crystal composition is 0.5 mass% or greater and 10 mass% or less.

13. The light control sheet according to any one of claims 1 to 12, wherein
a ratio of the transparent polymer layer to the transparent polymer layer and the liquid crystal composition is 30 mass% or greater and 60 mass% or less.

14. The light control sheet according to any one of claims 1 to 13, wherein
the light control layer further contains a spacer that exhibits the same color as that exhibited by the dichroic dye in the opaque state.

15. A light control sheet comprising:
a light control layer including a transparent polymer layer containing a plurality of domains, and a liquid crystal composition filling the domains, the liquid crystal composition containing a liquid crystal compound and a dichroic dye; and
a pair of transparent electrode layers sandwiching the light control layer,
the light control sheet being configured to change alignment of the liquid crystal compound and the dichroic dye in response to a change in potential difference between the pair of transparent electrode layers, thereby switching from a transparent state to a colored opaque state, wherein
a ratio of the liquid crystal compound to the transparent polymer layer and the liquid crystal composition is 40 mass% or greater and 70 mass% or less, and
the transparent polymer layer contains a polymer compound having an intramolecular dissociative group of an oxime ester compound at an end of a molecular structure.

16. A method of producing a light control sheet, the method comprising:
preparing a coating liquid containing a liquid crystal composition containing a liquid crystal compound and a dichroic dye, a photopolymerizable compound, and a photopolymerization initiator;
forming a coating film made of the coating liquid between first and second transparent electrode layers, the first transparent electrode layer being disposed on a first transparent support layer in a first sheet, the second transparent electrode layer being disposed on a second transparent support layer in a second sheet; and
irradiating the coating film with light to proceed polymerization reaction of the photopolymerizable compound to form a light control layer including a transparent polymer layer having a plurality of domains and the liquid crystal composition filling the domains, wherein
the photopolymerization initiator contains an oxime ester compound, and
the coating liquid has a lower temperature limit of an isotropic phase of 0°C or higher and lower than 30°C.
